# EUROPÄISCHE PATENTANMELDUNG

(11) **EP 1 160 226 A2**
(43) Veröffentlichungstag der Anmeldung: **05.12.2001**
(21) Anmeldenummer: 01107323.6
(22) Anmeldetag: 24.03.2001
(51) Int. Cl.: C05F 11/00, C05F 9/00, C05F 9/02, C05G 3/04

(54) **Verfahren zur Hertellung von Bodenhilfsstoffen aus cellulosehaltigem Material**

(30) Priorität: 02.05.2000 DE 10021319
(71) Anmelder: Voith Paper Patent GmbH, 89522 Heidenheim (DE)
(72) Erfinder: Gehr, Volker, Dr., 88255 Baienfurt (DE); Reinholdt, Boris, 88289 Waldburg (DE); Schubert, Hans-Ludwig, Dr., 88255 Baienfurt (DE)

(57) **Zusammenfassung**

Das Verfahren dient zur Herstellung von torfähnlichen Bodenhilfsstoffen aus cellulosehaltigem Material, z.B. Altpapier, Zellstoff oder Holzstücken. Aus dem Rohstoff wird zunächst ein hochkonsistenter Faserstoff (F1) mit einem Feststoffgehalt zwischen 20 % und 60 % hergestellt, dieser dann zu einem feuchten, voluminösen, flockigen Stoff (F2) umgewandelt und anschließend getrocknet. Der so hergestellte Boden hilfsstoff (F3) eignet sich zur Verbesserung von Böden im Gartenbau und in der Landwirtschaft.

## Beschreibung

Die Erfindung betrifft ein Verfahren gemäß dem Oberbegriff des Anspruchs 1.

Es ist bekannt, dass torfähnliche Bodenhilfsstoffe eingesetzt werden, um die im Gartenbau oder in der Landwirtschaft verwendeten Böden zu verbessern. Weiterhin werden solche Stoffe auch einzeln oder in Kombination eingesetzt, um einen künstlichen Boden zur Kultivierung von Pflanzen zu haben (Substrate). Solche Bodenhilfsstoffe werden auch Torfersatzstoffe genannt, da ihr Einsatz ähnlichen Zielen dient wie der von Torf. Torf ist ein Naturprodukt, das durch unvollständige Zersetzung von abgestorbener pflanzlicher Substanz unter Luftabschluss entstanden ist. Im Tagebau werden in Hochmooren Weißtorf, bis 1400 Jahre alt, und Schwarztorf, bis 7000 Jahre alt, abgebaut. Durch die lange Entstehungszeit und den großen Bedarf sind die natürlichen Ressourcen, die Hochmoore, nur begrenzt nutzbar. Bisherige Substitutionsmöglichkeiten für Torf bestehen hauptsächlich im Hobbygartenbau, z.B. durch Rinden-Humus, Kompost, Holzfasem, Kokosfasern, Reisspelzen und Chinaschliff. Im Erwerbsgartenbau sind die Substitutionsmöglichkeiten auf Grund von höheren Qualitätsanforderungen stark begrenzt. Dies ist hauptsächlich durch die Stickstoff-Fixierung der in den bisherigen Torfersatzstoffen vorhandenen Bakterien bedingt. Dadurch stehen für das Pfianzenwachstum weniger Nährstoffe zur Verfügung.

Ein Beispiel für die Herstellung von Torf-Substitutionsprodukten wird z.B. in der EP 0 593 795 A1 beschrieben. Dabei dient als Ausgangsstoff Altpapier, welches zu einer Pulpe aufgelöst, dann eingedickt, grob zerfasert und bei hohen Temperaturen getrocknet wird. Zur Grobzerfaserung wird eine Schlagkreuzmühle vorgeschlagen und zum Trocknen ein Heißlufttrockner, der vorzugsweise bei Temperaturen um 200° C betrieben werden soll.

Aus der US 4,369,054 ist ein Verfahren bekannt, mit dem schlecht verwertbares Altpapier dadurch zur Bodenkultivierung genutzt werden kann, dass es mit poröser Schlacke vermischt wird. Ein hochwertiger Boden lässt sich so nicht erzeugen.

Die US 5,742,721 beschreibt ein Verfahren, bei dem organisches Abfallmaterial mit einem Binder kombiniert wird und bei einer Temperatur, die oberhalb der Verglasungstemperatur des Binders liegt, zu einem sterilen Granulat umgewandelt wird. Dieses Verfahren ist besonders auf die Verwendung von Tierkörpern gerichtet, deren Vernichtung ein beträchtliches Problem darstellt. Dagegen zeigt die US 5,700,138 ein Verfahren, welches sich auf die Verwertung von Papierrohstoffen oder anderen faserigen Stoffen bezieht. Dabei wird der Rohstoff nach entsprechender Vorbereitung zu einem feuchten Granulat agglomeriert, wozu eine spezielle Apparatur, vorzugsweise eine Stiftmühle, verwendet wird. In einer separaten Trommel wird das Granulat zum Abrollen gebracht, wobei die Granulen aneinander reiben, um ihnen eine möglichst glatte Oberfläche ohne vorstehende Fasern zu bilden. Anschließend wird das Granulat getrocknet. Auch dieses aufwendige Verfahren bildet keinen optimalen Bodenhilfsstoff.

Gemäß einer weiteren Publikation, der GB 444,182, soll ein hygroskopisches Material zur Bodenverbesserung hergestellt werden. Es wird vorgeschlagen, die Papierabfälle oder auch spezielle Grassorten zu trocknen, zu zerkleinern und mit einer chemisch-hygroskopischen Substanz, z.B. Kalzium-Chlorid, zu vermischen. Dieser so erzeugte Stoff soll besonders geeignet sein, Feuchtigkeit aufzusaugen und zu halten und gleichzeitig unempfindlich gegen Insektenfraß sein.

Der Erfindung liegt die Aufgabe zu Grunde, ein Verfahren zu schaffen, mit dem es gelingt, Bodenhilfsstoffe zu erzeugen, welche von ihrer mechanischen Struktur besonders geeignet sind. Insbesondere sollen sie Eigenschaften aufweisen, die die positiven Eigenschaften von Torf zumindest erreichen, möglichst noch übertreffen.

Diese Aufgabe wird durch die im Kennzeichen des Anspruchs 1 genannten Merkmale gelöst.

Das erfindungsgemäße Verfahren kann von verschiedenen Rohmaterialien ausgehen, und zwar z.B. von Altpapier, von Frischzellstoff, Holzfasern oder von Holzstücken. Diese Materialien haben im Gegensatz zum natürlichen Torf den Vorteil, dass sie nachwachsen oder zumindest ihrerseits aus nachwachsenden Rohstoffen erzeugt werden können. Außerdem sind sie, anders als natürlicher Torf (pH 3-4), nicht extrem sauer, haben also einen pH-Wert von 5,5 - 6,5 oder auch darüber. Da viele Böden ohnehin schon zu sauer sind, ist also ihr Einsatz als Bodenhilfsstoff günstiger.

Erfindungsgemäß hergestellte Bodenhilfsstoffe lassen sich einsetzen, um den Boden aufzulockern, um dessen Wasserspeicherfähigkeit zu erhöhen und um den pH-Wert zu regulieren. Außerdem können sie die Nährstoffversorgung verbessern.

Der Ablauf des Verfahrens sieht vor, zunächst einen Faserstoff zu bilden, was für die spätere Stoffstruktur günstig ist. Es hat sich gezeigt, dass nach der Trocknung dieses Materials ein sehr gut zu verarbeitender Bodenhilfsstoff anfällt, der auf Grund seiner stofflichen Zusammensetzung und seiner torfähnlichen mechanischen Struktur sehr viele Vorteile hat. So werden Volumenbeständigkeit und Wasseraufnahmevermögen kombiniert mit einer relativ guten Verrottungsfestigkeit. Bei der Umwandlung des hochkonsistenten Faserstoffes zu Flocken kann eine höhere Temperatur das Ergebnis des Verfahrens verbessern. Ab 120° C ist der Stoff praktisch steril. Ab 130° C wird das Lignin weich, so dass die dabei gebildeten Flocken nach dem Abkühlen besonders formstabil sind. Insbesondere kann die erwünschte Kräuselung der Fasern (curling) auf Dauer stabilisiert werden.

Durch Verhornung der Oberflächen, die beim Trocknen erfolgt, wird eine zweckmäßige Steifigkeit erzielt und die Angriffsmöglichkeit für Bakterien reduziert. Auch das führt zu einer hohen Volumenstabilität über einen längeren Zeitraum. In bestimmtem Umfang kann die Verhornung durch Einstellung der Betriebsparameter bei der Trocknung gesteuert werden. So ist eine sehr schonende Trocknung bei geringen Temperaturen, eventuell unter Teilvakuum möglich oder eine unter schärferen Bedingungen, d.h. mit einer erhöhten Temperatur, welche die Verhornung weiter verstärkt und den Stoff sterilisiert. Auf die Wirkung der unterschiedlichen Temperaturen wurde schon hingewiesen. Ein so getrockneter Stoff ist daher voraussichtlich länger beständig gegen Verrottung im Erdboden.

Die Erfindung und ihre Vorteile werden erläutert an Hand von Zeichnungen. Dabei zeigen:
Fig. 1 ein grundsätzliches Verfahrensschema;
Fig. 2 ein exemplarisches Anlagenschema zur Durchführungs des Verfahrens mit einem durch Altpapier gebildeten Ausgangsrohstoff;
Fig. 3 Schnitt durch eine Flockiervorrichtung zur Durchführung eines wichtigen Verfahrensschrittes;
Fig. 4 Teilansicht auf eine Garnitur für eine Flockiervorrichtung;
Fig. 5 ein Anlagenschema, bei dem von Holzstücken als Ausgangsrohstoff ausgegangen wird;
Fig. 6 Ansicht des erfindungsgemäß hergestellten Bodenhilfsstoffes mit Maßstab.

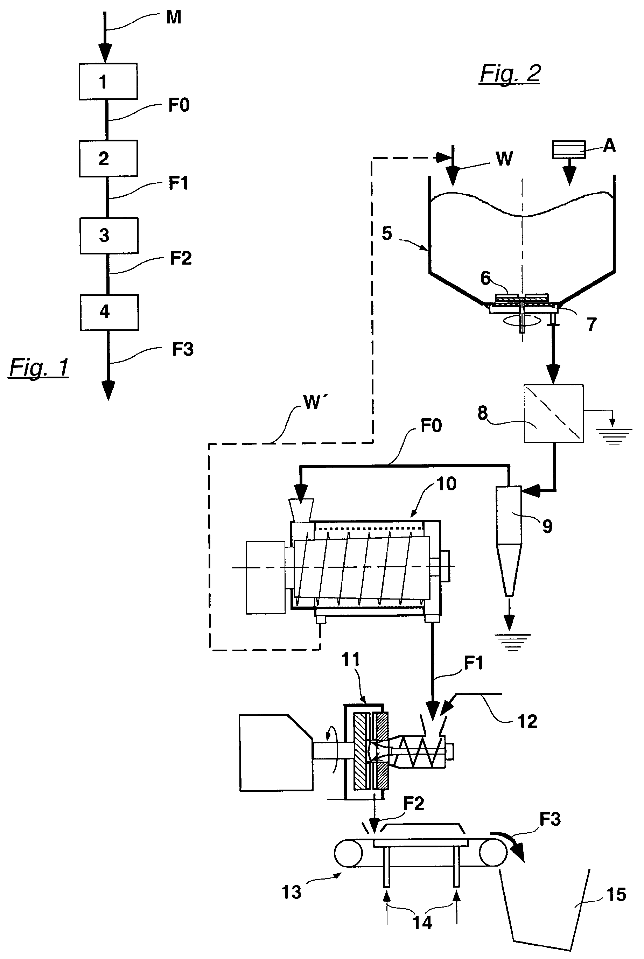

Fig. 1 zeigt ein einfaches Verfahrensschema mit den wichtigsten erfindungsgemäßen Verfahrensschritten. Das cellulosehaltige Material M wird durch einen Zerkleinerungsschritt 1 zum Faserstoff F0 verarbeitet und durch eine sich z.B. direkt anschließende Konsistenzeinstellung 2 zu einem hochkonsistenten Faserstoff F1 eingedickt. Dieser gelangt dann in einen Umwandlungsschritt 3, der aus ihm einen feuchten, voluminösen, flockigen Stoff F2 macht, der dann anschließend in einem Trockenschritt 4 getrocknet wird, so dass der Bodenhilfsstoff F3 entsteht.

Auch die Fig. 2 ist eine vereinfachte Darstellung. Sie zeigt aber die Apparaturen, die man zur Durchführung des Verfahrens verwenden kann, etwas genauer. Das dargestellte Verfahren geht aus von einem Rohstoff, der aus Altpapier A besteht und zusammen mit Wasser W in einem Stofflöser 5 mit Hilfe eines angetriebenen Rotors 6 aufgelöst wird.
Die so erzeugte Faserstoffsuspension gelangt durch ein Sieb 7 im Boden des Stofflösers 5 sowie durch einen Grobsortierer 8 und Dickstoffreiniger 9, wodurch die störenden Bestandteile des Altpapiers entfernt werden. Dabei hat die Suspension in der Regel einen Feststoffgehalt zwischen 3 und 6 %. Es sind aber auch Auflöseverfahren denkbar, bei denen eine Stoffdichte über 12 % eingestellt wird. Durch die sich nun anschließende Eindickvorrichtung 10, hier eine Schneckenpresse, wird ein hochkonsistenter Faserstoff F1 gebildet. Das abgepresste Wasser W' kann mit Vorteil wieder zum Auflösen im Stofflöser 5 verwendet werden. Der Faserstoff F1 mit einem Feststoffgehalt zwischen 20 und 60 % gelangt in eine Flockiervorrichtung 11, die - wie bereits beschrieben - dazu dient, aus dem hochkonsistenten Faserstoff einen feuchten, voluminösen, flockigen Stoff F2 zu bilden. In den Fällen, in denen Zusatzstoffe 12 zugegeben werden, empfiehlt sich das besonders am Einlauf in die Flockiervorrichtung 11. Die im Stoff F2 noch enthaltene Flüssigkeit, überwiegend Wasser, wird anschließend auf einem Trockner 13, hier einem mit Dampf 14 beheizten Bandtrockner, thermisch entfernt, so dass der Bodenhilfsstoff F3 entsteht. Dieser fällt dann als trockener Stoff in den Bunker 15. Das verdampfte Wasser kann kondensiert und im Prozess wieder verwendet werden.

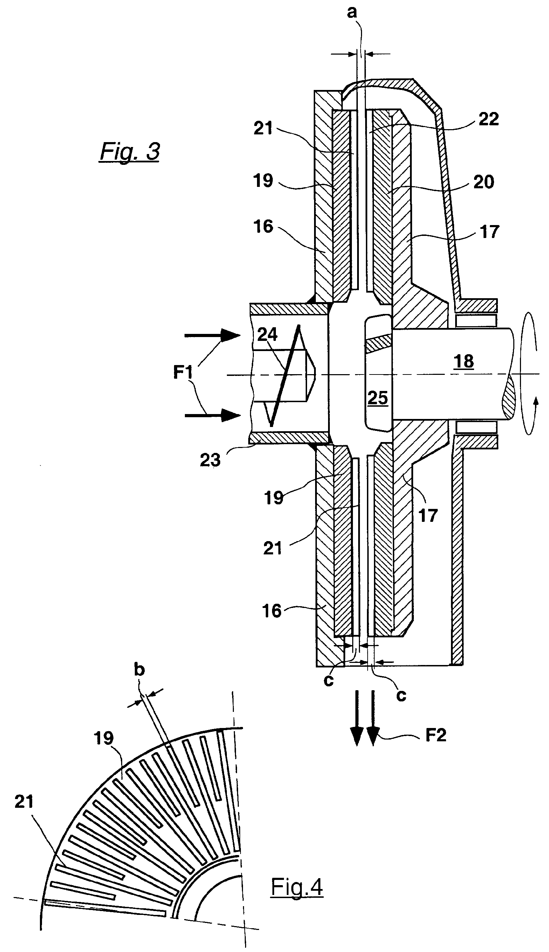

Die in der Fig. 3 im Schnitt gezeigte Flockiervorrichtung weist zwei
Bearbeitungsscheiben auf, und zwar einen Stator 16 mit einer Garnitur 19 sowie einen von einer Welle 18 angetriebenen Rotor 17 mit einer Garnitur 20. Die Garnituren 19, 20 sind mit axialen Vorsprüngen 21 bzw. 22 versehen, die zum Transport des Stoffes und zur Übertragung der mechanischen Arbeit dienen. Ihre axiale Höhe c ist vorzugsweise mindestens 3 mm. Wichtig ist, dass die Garnituren nicht wie bei einer Mahlvorrichtung aufeinandergepresst werden, sondern dass sie so betrieben werden, dass zwischen ihnen ein definierter Abstand a bleibt. Dadurch ist die auf den Stoff übertragene spezifische Arbeit auch sehr viel geringer als z.B. bei Refinem oder Dispergern. Der nicht pumpfähige hochkonsistente Faserstoff wird radial innen durch ein Einlaufrohr 23 eingetragen, welches zum Transport eine Förderschnecke 24 enthält. Nach dem Eintritt in diese Vorrichtung wird er durch ein Schleuderkreuz 25 erfasst und zwischen die Garnituren gebracht. Nach Bearbeitung tritt der feuchte, voluminöse, flockige Stoff S2 aus dem Gehäuse dieser Vorrichtung wieder aus.

Die Fig. 4 zeigt einen Teil einer möglichen Garnitur 19 mit leistenförmigen Vorsprüngen 21, wobei diese jeweils eine Breite b haben. Das Muster dieser Garnituren kann auch anders aussehen. So können die Breite variiert werden oder der Winkel gegenüber dem Radius, um nur diese beiden Parameter zu nennen. Da keine Schneidwirkung erzielt werden soll, können auch nicht leistenförmige Vorsprünge, wie Noppen-, Rauten- oder Waffelmuster, sinnvoll sein.

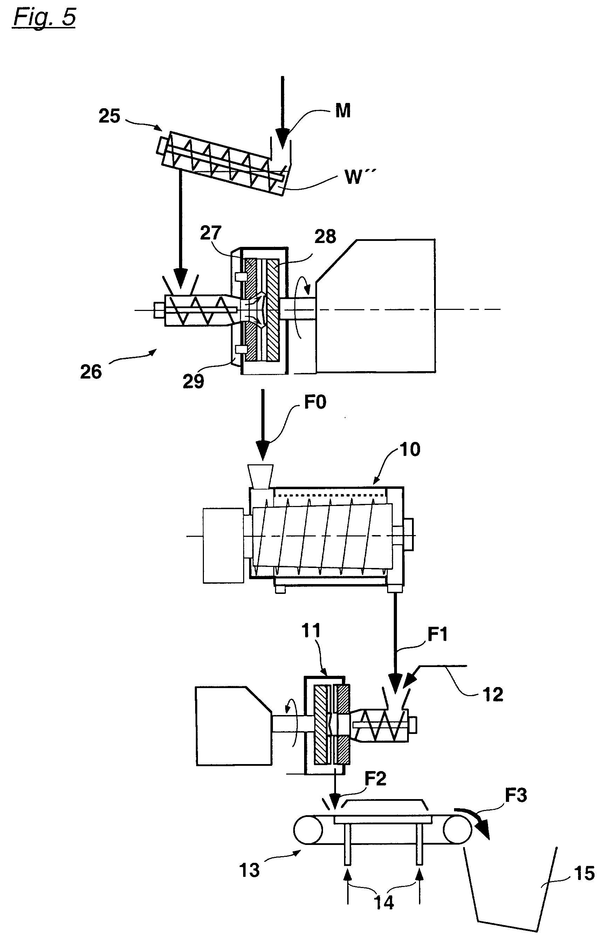

Ein Anlagenschema für das erfindungsgemäße Verfahren unter Verwendung von Holzstücken als Ausgangsmaterial zeigt die Fig. 5. Demnach wird das cellulosehaltige Material M in Form von Holzstücken (Hackschnitzeln) in einer nur schematisch dargestellten Einweichvorrichtung 25 mit einer wässrigen Flüssigkeit W" imprägniert. Die so präparierten Hackschnitzel gelangen dann in einen Hackschnitzel-Refiner 26, welcher in der üblichen Weise mit einem Stator 27 und einem Rotor 28 ausgestattet ist. Die Garnituren dieser Mahlwerkzeuge können als grobe Messergarnituren ausgebildet sein, zwischen denen die Hackschnitzel zerfasert werden. Dabei werden Stator 27 und Rotor 28 durch eine Belastungseinrichtung 29 axial zusammengepresst. Der Faserstoff F0 wird aus diesem Hackschnitzel-Refiner 26 ausgespült und gelangt, wie bereits im Zusammenhang mit Fig. 1 beschrieben, in eine Eindickvorrichtung 10. Die sich nun anschließenden Verfahrensschritte können prinzipiell die gleichen sein wie bei einem Ausgangsrohstoff in Form von Altpapier oder Zellstoff. Es ist allerdings ohne weiteres vorstellbar, dass der aus dem Hackschnitzel-Refiner 26 austretende Faserstoff F0 eine so hohe Konsistenz hat, dass die Eindickvorrichtung 10 entfallen kann oder zumindest wesentlich einfacher oder kleiner ist.

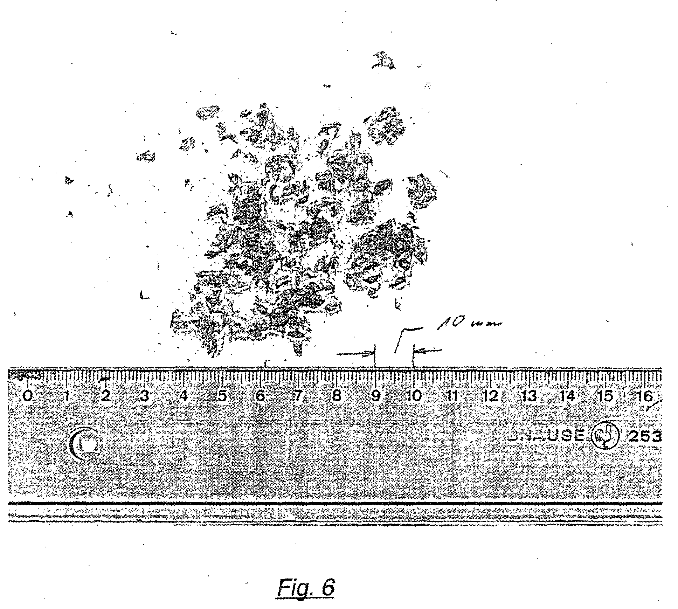

In Fig. 6 ist der durch das erfindungsgemäße Verfahren in einem Versuch erzeugte Bodenhilfsstoff gezeigt. Man erkennt die trockenen Flocken und kann an Hand des beigelegten Maßstabes ihre ungefähren Größenverhältnisse sehen.

## Patentansprüche

1. Verfahren zur Herstellung von torfähnlichen Bodenhilfsstoffen aus cellulosehaltigem Material (M), bei dem das cellulosehaltige Material (M) zerkleinert und getrocknet wird,
**dadurch gekennzeichnet,**
**dass** aus dem cellulosehaltigen Material ein hochkonsistenter Faserstoff (F1) mit einem Feststoffgehalt zwischen 20 und 60 % gebildet wird, dass dieser anschließend zu einem voluminösen flockigen Stoff (F2) umgewandelt wird und
**dass** durch das sich anschließende Trocknen ein Bodenhilfsstoff (F3) entsteht.

2. Verfahren nach Anspruch 1,
**dadurch gekennzeichnet,**
**dass** die Umwandlung zum voluminösen flockigen Stoff (F2) durch eine mechanische Behandlung durchgeführt wird, bei der eine spezifische Arbeit von maximal 50 kWh/to übertragen wird.

3. Verfahren nach Anspruch 2,
**dadurch gekennzeichnet,**
**dass** die übertragene spezifische Arbeit maximal 10 kWh/to ist.

4. Verfahren nach Anspruch 2 oder 3,
**dadurch gekennzeichnet,**
**dass** der hochkonsistente Faserstoff (F1) zwischen zwei mit axialen Vorsprüngen versehenen Bearbeitungsscheiben, von denen wenigstens eine rotiert, eingebracht
und mechanisch bearbeitet wird.

5. Verfahren nach Anspruch 4,
**dadurch gekennzeichnet,**
**dass** die axialen Vorsprünge einer Bearbeitungsscheibe in einem Abstand (a) von mindestens 3 mm von den axialen Vorsprüngen der anderen Scheibe vorbeibewegt werden.

6. Verfahren nach Anspruch 5,
**dadurch gekennzeichnet,**
**dass** ein Abstand (a) von mindestens 10 mm eingestellt wird.

7. Verfahren nach Anspruch 4, 5 oder 6,
**dadurch gekennzeichnet,**
**dass** die axialen Vorsprünge leistenförmig sind.

8. Verfahren nach Anspruch 7,
**dadurch gekennzeichnet,**
**dass** die axialen Vorsprünge eine Höhe (c) von mindestens 3 mm haben.

9. Verfahren nach einem der voranstehenden Ansprüche,
**dadurch gekennzeichnet,**
**dass** die Umwandlung zu einem voluminösen flockigen Stoff (F2) bei einer Temperatur durchgeführt wird, die über der Umgebungstemperatur liegt.

10. Verfahren nach Anspruch 9,
**dadurch gekennzeichnet,**
**dass** die Umwandlung zu einem voluminösen flockigen Stoff (F2) bei einer Temperatur über 80° C durchgeführt wird.

11. Verfahren nach Anspruch 10,
**dadurch gekennzeichnet,**
**dass** die Umwandlung zu einem voluminösen flockigen Stoff (F2) bei einer Temperatur über 100° C durchgeführt wird.

12. Verfahren nach Anspruch 11,
**dadurch gekennzeichnet,**
**dass** die Umwandlung zu einem voluminösen flockigen Stoff (F2) bei einer Temperatur über 130° C durchgeführt wird.

13. Verfahren nach einem der voranstehenden Ansprüche,
**dadurch gekennzeichnet,**
**dass** das Trocknen bei einer Temperatur unter 100° C durchgeführt wird.

14. Verfahren nach Anspruch 13,
**dadurch gekennzeichnet,**
**dass** beim Trocknen ein Unterdruck angelegt wird.

15. Verfahren nach Anspruch 12,
**dadurch gekennzeichnet,**
**dass** beim Trocknen eine Temperatur zwischen 100 und 200° C eingestellt wird.

16. Verfahren nach einem der voranstehenden Ansprüche,
**dadurch gekennzeichnet,**
**dass** zu dem cellulosehaltigen Material Zusatzstoffe (12) zugegeben werden, die zur Volumensteigerung des fertigen Bodenhilfsstoffes (F3) dienen.

17. Verfahren nach einem der voranstehenden Ansprüche,
**dadurch gekennzelchnet,**
dass zu dem cellulosehaltigen Material Zusatzstoffe (12) zugegeben werden, die zur Steigerung der Wasseraufnahmefähigkeit und zur Volumensteigerung des fertigen Bodenhilfsstoffes (F3) dienen.

18. Verfahren nach einem der voranstehenden Ansprüche,
**dadurch gekennzeichnet,**
**dass** dem cellulosehaltigen Material Zusatzstoffe (12) zugegeben werden, die dessen Farbe sofort oder nach Abschluss des Verfahrens ändern.

19. Verfahren nach einem der voranstehenden Ansprüche,
**dadurch gekennzeichnet,**
**dass** das cellulosehaltige Material zunächst mit Wasser zu einer Faserstoffsuspension aufgelöst und anschließend auf einen Feststoffgehalt zwischen 20 und 60 % eingedickt wird, wodurch der voluminöse flockige Stoff (F2) entsteht.

20. Verfahren nach Anspruch 19,
**dadurch gekennzeichnet,**
**dass** das cellulosehaltige Material in einem Stofflöser (5) aufgelöst wird.

21. Verfahren nach Anspruch 19 oder 20,
**dadurch gekennzeichnet,**
**dass** die Faserstoffsuspension in speziellen Trennverfahren von faserfremden Verunreinigungen gereinigt wird.

22. Verfahren nach Anspruch 19, 20 oder 21,
**dadurch gekennzeichnet,**
**dass** das beim Eindicken anfallende Wasser zur Auflösung des Materials verwendet wird.

23. Verfahren nach Anspruch 22,
**dadurch gekennzeichnet,**
**dass** nach dem Eindicken die Zugabe von Zusatzstoffen erfolgt.

24. Verfahren nach einem der voranstehenden Ansprüche,
**dadurch gekennzeichnet,**
**dass** als cellulosehaltiges Ausgangsmaterial Altpapier verwendet wird.

25. Verfahren nach einem der Ansprüche 1 bis 23,
**dadurch gekennzeichnet,**
**dass** als cellulosehaltiges Ausgangsmaterial Zellstoff verwendet wird.

26. Verfahren nach einem der Ansprüche 1 bis 23,
**dadurch gekennzeichnet,**
**dass** als cellulosehaltiges Ausgangsmaterial Holzstücke verwendet werden, welche mit Dampf oder Flüssigkeit (W") imprägniert, anschließend mechanisch
zerfasert und dann als hochkonsistenter Faserstoff (F1) mit einem Feststoffgehalt zwischen 20 und 60 % bereitgestellt werden.

27. Verfahren nach Anspruch 26,
**dadurch gekennzeichnet,**
**dass** die Holzstücke zum Imprägnieren in einer überwiegend wasserhaltigen Flüssigkeit (W") eingeweicht werden.

28. Verfahren nach Anspruch 26 oder 27,
**dadurch gekennzeichnet,**
**dass** die imprägnierten Holzstücke in einem Hackschnitzel-Refiner (26) zerfasert werden, der von der Art einer zur Refiner-Schliff-Erzeugung verwendeten Maschine ist.

29. Verfahren nach Anspruch 26, 27 oder 28,
**dadurch gekennzeichnet,**
**dass** die Zerfaserung bei erhöhter Temperatur erfolgt.

30. Verfahren nach Anspruch 26, 27, 28 oder 29,
**dadurch gekennzeichnet,**
**dass** das in den Holzstücken enthaltene Lignin nicht entfernt wird.

31. Verfahren nach Anspruch 26, 27, 28, 29 oder 30,
**dadurch gekennzeichnet,**
**dass** die Holzstücke durch Zerhacken von Industrieholz oder Holz aus Windbruch hergestellt werden.
